# EUROPEAN PATENT APPLICATION

(11) **EP 4 234 395 A1**
(43) Date of publication of application: **30.08.2023**
(21) Application number: 22158972.4
(22) Date of filing: 25.02.2022
(51) Int. Cl.: B64C 9/10, B64C 13/30, B64C 23/06

(54) **LOAD ALLEVIATION DEVICE FOR A WING TIP OF AN AIRCRAFT, METHOD FOR ALLEVIATING THE LOAD OF A WING TIP OF AN AIRCRAFT, AND AIRCRAFT**

(71) Applicant: Airbus Operations GmbH, 21129 Hamburg (DE)
(72) Inventor: Schlipf, Bernhard, 21129 Hamburg (DE); Daandels, Dort, 21129 Hamburg (DE)

(57) **Abstract**

A load alleviation device (11, 31, 41) for a wing tip of an aircraft comprises one or more control surface devices (12, 32, 42) for increasing and/or decreasing the lift of a wing tip (10), and a drive train (13) connected to at least one of the control surface devices (12, 32, 42) for actuating a movement of the control surface devices (12, 32, 42). The drive train (13) is configured to be mounted with one end (14) near the root (15) of the wing tip (10) and to extend spanwise between an upper shell (16) and a lower shell (17) of the wing tip (10) at least partly out of the neutral axis (18) of the wing tip (10), to cause a movement of the control surface device (12, 32, 42) by the bending of the wing tip (10). The load alleviation device (11, 31, 41) is used in a method for alleviating the load of a wing tip of an aircraft.

## Description

The invention relates to a load alleviation device for a wing tip of an aircraft, to a method for alleviating the load of a wing tip of an aircraft, and to an aircraft.

The invention is in particular but not exclusively applicable for wings having a high span, for wings having a high aspect ratio, and for wings having folding wing tips.

Aircrafts and in particular commercial aircrafts typically comprise various control surface devices as part of their wings or mounted on the wings. The control surface devices or control devices usually comprise leading edge devices positioned at the leading edge of a wing and trailing edge devices positioned at the trailing edge of the wing. Trailing edge devices may comprise e.g. flaps, tabs, ailerons, flaperons and others, each having a specific function and influencing the aerodynamic behaviour and performance of the aircraft.

EP 2 851 287 B1 discloses a trailing edge system comprising an adaptive trailing edge element, an electric motor actuator configured to actuate the adaptive trailing edge element, a linkage system coupling the electric motor actuator to the adaptive trailing edge element, and a damper for damping vibrations of matter that may be aerodynamically induced in the adaptive trailing edge element.

Depending on the flight conditions and in particular gusts, strong loads may act on the wings of the aircraft, due to accelerations of the aircraft of e.g. 2,5 g and more. Thus, the wings need to resist high bending loads and must be constructed correspondingly which results in high weight and costs.

Known measures related to the high loads comprise passive solutions like e.g. a semi-elastic hinge of the wing tips, as well as actuated solutions like e.g. actuated ailerons on the wing tips or spoilers on the outer wing or on the wing tip. However, the passive solutions show aerodynamic drawbacks, and the actuated solutions have to deal with very high deployment rates, actuator fatigue, limited reliability and associated costs of the actuation.

It is the object of the invention to provide a load alleviation to reduce the wing bending load, and to increase reliability at reduced costs and weight.

The object is achieved by a load alleviation device for a wing tip of an aircraft, comprising: one or more control surface devices for increasing and/or decreasing the lift of a wing tip, a drive train connected to at least one of the control surface devices for actuating a movement of the control surface device, wherein the drive train is configured to be mounted with one end near the root of the wing tip and to extend spanwise between an upper shell and a lower shell of the wing tip at least partly out of the neutral axis of the wing tip, to cause a movement of the control surface device by the bending of the wing tip.

By the load alleviation device, the load acting on the wing tip is reduced. A high reliability is achieved, and costs as well as weight can be reduced. Further, there is a benefit regarding the availability of the aircraft.

The actuations make use of the bending in the wing tip itself and the resulting difference in the strain levels of upper and lower shell of the wing tip.

Preferably, the control surface device is configured to be actuated by different strain levels of the upper shell and the lower shell of the wing tip resulting from its bending.

Preferably, the drive train comprises at least one spanwise extending actuation element configured for being actuated by the bending of the wing tip and connected to one or more drive stations.

Preferably, each drive station comprises a transmission unit for transmitting the spanwise movement of the actuation element to the one or more control surface devices.

Preferably, each drive station comprises a lever element for amplifying the movement of the actuation element when that movement is transmitted to the control surface device.

Preferably, at least a major part of the drive train is mounted closer to one of the wing shells than to the other wing shell.

Preferably, the drive train is designed so that the major part of actuation element is positioned out of the neutral axis.

Preferably, the actuation element has a high longitudinal stiffness compared to the stiffness of the upper and lower shells of the wing tip.

Preferably, the actuation element is configured as a strut or rod.

Preferably, the load alleviation comprises an actuation element support configured for being mounted to one of the upper and lower shells which is located further away from at least the major part of the actuation element than the other one of the upper and lower shells of the wing tip.

Preferably, the transmission unit and/or the lever element comprises a rocker lever.

Preferably, the at least one control surface device is configured as a tab, Mini-TED, flap, aileron, and/or spoiler element, or a combination thereof.

According to an aspect, the invention provides a method for alleviating the load of a wing tip of an aircraft, comprising the steps: providing one or more control surface devices for increasing and/or decreasing the lift of the wing tip; providing a drive train connected to at least one of the control surface devices, wherein the drive train is mounted with one end near the root of the wing tip and extending spanwise between an upper shell and a lower shell of the wing tip at least partly out of the neutral axis of the wing tip when the wing tip is bent; actuating a movement of the control surface device by causing a movement of the drive train through the bending of the wing tip.

According to another aspect, the invention provides a wing tip, comprising the load alleviation device according to the invention or using the method for alleviating the load of a wing tip of an aircraft according to the invention.

According to a further aspect, the invention provides an aircraft comprising a wing which comprises a wing tip according to the invention.

Characteristics, details and advantages described in relation to the load alleviation device are also related to the method for alleviating the load of a wing tip, and vice versa. The same applies for the wing tip and the aircraft.

In the following, exemplary embodiments of the invention showing further advantages and characteristics are described in detail with reference to the figures, in which:
- **Figure 1**: shows a schematic top view of a wing tip comprising the load alleviation device according a preferred embodiment of the invention.
- **Figure 2**: shows a schematic sectional view of the wing tip and the load alleviation device shown in Fig. 1;
- **Figure 3**: shows a schematic cross section view of the wing tip and the load alleviation device shown in Figs. 1 and 2;
- **Figure 4**: shows an enlarged cross section view of a lever element of the load alleviation device shown in Figs. 1 to 3;
- **Figure 5**: shows schematic cross section views of the load alleviation device in different positions depending on the bending of the wing tip;
- **Figure 6**: shows a schematic cross section view of a load alleviation device according to a second embodiment of the invention, comprising a spoiler element;
- **Figure 7**: shows a schematic cross section view of a load alleviation device according to a third embodiment of the invention, comprising an aileron;
- **Figure 8**: shows a schematic top view of a wing tip comprising the load alleviation device according a preferred embodiment of the invention, comprising an active actuator; and
- **Figure 9**: shows a schematic top view on a part of an aircraft comprising a main wing and a wing tip equipped with a load alleviation device according to the invention.

In the figures, similar or identical elements and features are designated by the same reference numbers. The features, functions and advantages discussed herein and shown in the various embodiments can be achieved independently and combined in other embodiments.

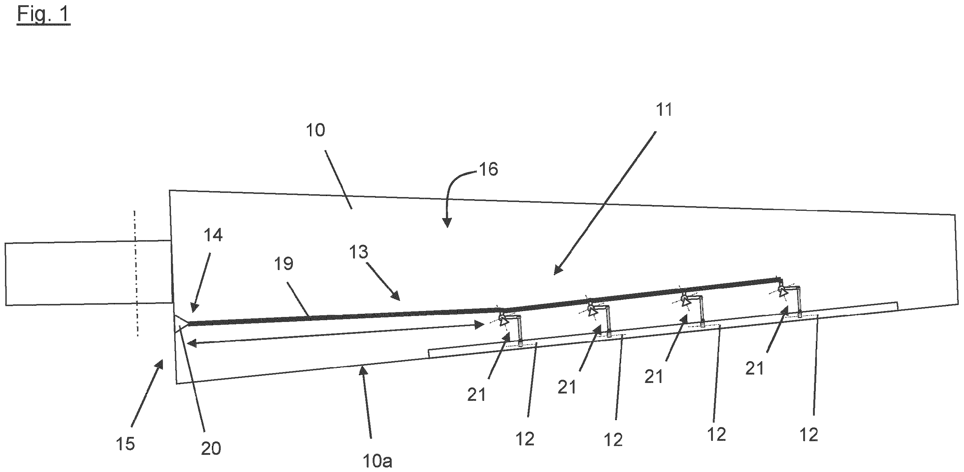

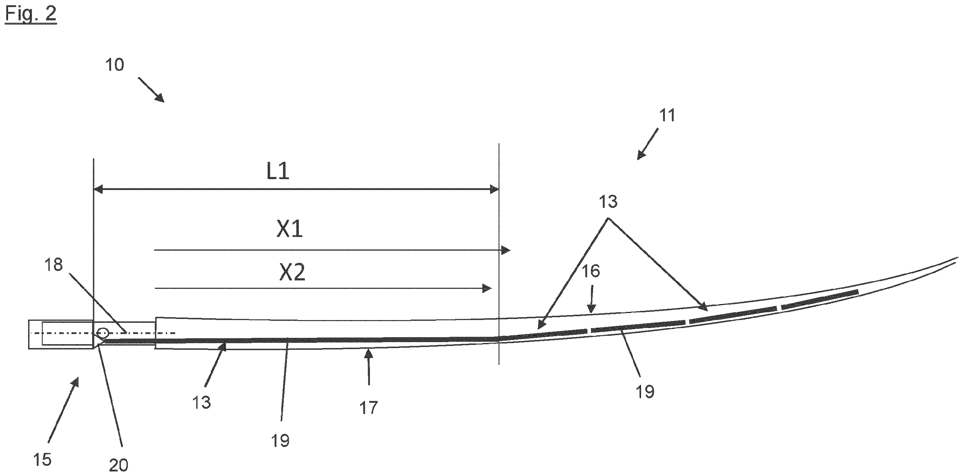

**Figures 1** **and** **2** show a wingtip 10 comprising a load alleviation device 11 according to a preferred embodiment of the invention. The load alleviation device 11 comprises a number of control surface devices 12 configured as trailing edge devices (TEDs or MiniTEDs) for increasing and/or decreasing the lift of wingtip 10. The trailing edge devices might be segmented spanwise.

Further, the load alleviation device 11 comprises a drivetrain 13 connected to the control surface devices 12 in order to actuate a movement of the control surface devices 12. The drivetrain 13 is mounted with its one end 14 at a mounting location 20 near the root 15 of wingtip 10 by which the wingtip is connected to a main wing of an aircraft. From mounting location 20, drivetrain 13 extends spanwise between an upper shell 16 and a lower shell 17 of wingtip 10 (see Fig. 2).

Drivetrain 13 comprises an elongated actuation element configured as a strut 19 which is fixedly connected with its one end 14 to the mounting location 20 near root 15 of wingtip 11. Another portion or the other end of actuation strut 19 is mechanically connected to a first coupling unit configured as a drive station 21.

In the embodiment shown here, the actuation strut 19 is mechanically connected to a plurality of such coupling units or drive stations 21 spanwise arranged one behind the other, each of them coupling the actuation strut 19 to one of the control surface devices 12, in order to actuate a movement of the control surface devices 12 mounted at the trailing edge 10a of wingtip 10. The number of drive stations 21 can be adapted depending on the requirements and the stiffness of the driven devices 12.

The drivetrain 13 may comprise a number of separate struts or rods 19 connected to each other by the coupling units 21, as depicted in Fig. 2. However, it may also comprise one single actuation strut or rod 19 designed for mechanically connecting one or more of the coupling units 21 to the mounting location 20.

The actuation strut 19 may be fixed at a portion of the main wing which is close to the root of wingtip 11, but it may also be fixed e.g. to a portion of wingtip 11 close to its root 15.

The control surface device 12 is actuated by different strain levels of the upper shell 16 and the lower shell 17 of the wingtip 10, which result from the bending of wingtip 11 e.g. due to a change of forces acting vertically on the wing tip. If the wingtip is bent upwards for example, the upper shell 16 of wingtip 10 is compressed and the lower shell 17 is stretched. Details are described in the following.

As depicted in **Figure 2****,** the drivetrain 13 is positioned and extends at least partly out of the neutral axis 18 of wingtip 10 when the wingtip is bent. Thus, by the bending of wingtip 10, drivetrain 13 causes a movement of the control surface devices 12. The neutral axis 18 is an axis within the wingtip 10 along which there are no additional stresses or strains when wingtip 10 is further bent from its starting bend.

The actuation strut 19 extends in the spanwise direction of wingtip 11 as close as possible to one of the outer shells 16, 17, in this embodiment as close as possible to the lower shell 17. Thus, it forms a low positioned structure within the wing tip, with a high longitudinal stiffness which does not stretch or only shows a minimum stretch when wingtip 10 is bent, i.e. when the wingtip undergoes a change of its curvature. The actuation element 19, which may be configured as a steering rod, has a sufficient cross-section and is sufficiently firm to transfer the forces acting on it to the control surface devices 12.

A first part of strut 19 is forming a relatively long rod or strut which firmly connects the mounting position 20 near the root 15 of wingtip 11 to the first coupling unit 21, wherein the rod or strut 19 is located out of the neutral axis 18 of wing tip 10, in this example below neutral axis 18.

As shown by the arrows L, X1 and X2 in Fig. 2, when the wing tip 10 is bent upwards from its starting curvature, the bending causes a strain in the shells 16, 17 which leads to a compression of the upper shell 16 to a length X2 such that it will be shortened. The length L1 of strut 19 remains constant. The upward bending further leads to a stretch of lower shell 17 to a length X1 such that lower shell 17 will be extended while L1 remains constant. The length difference of X1 and X2 resulting from the bending is used for actuating the control surface devices 12.

The same principle applies vice versa when the wing tip 10 is bent downwards. In this case, the upper shell 16 is stretched and the lower shell 17 is compressed. As a result, the length X2 will be extended and the length X1 will be shortened while the length L1 of strut 19 remains roughly the same.

Thus, the difference in the lengths X1, X2 of upper and lower shells 16, 17 caused by bending of wing tip 10 causes a movement of strut 19 relative to the coupling units 21 which are connected to one of the shells 16, 17. To achieve a large movement, the length difference between the position of drive station 21 and the mounting position 20 caused by bending the wing is important.

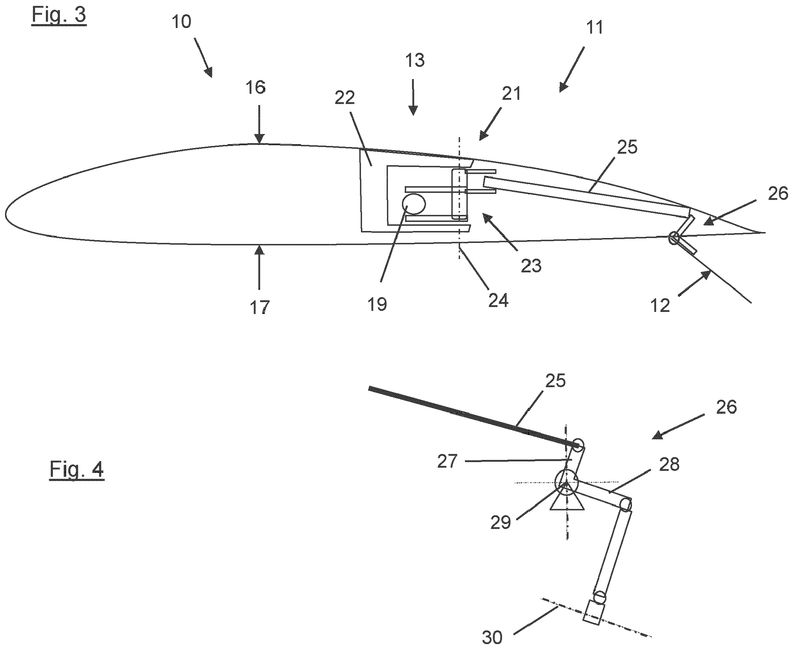

**Fig. 3** depicts further details of the load alleviation device 11 described above. The one or more coupling units 21 which form drive stations along the drive train 13 are arranged in the spanwise direction of wing tip 10 one behind the other, each of them being coupled to actuation strut 19. Each coupling unit or drive station 21 is configured to amplify the movement of actuation rod 19 of drive train 13 relative to drive station 21 when transmitting that movement to the respective control surface device 12 assigned to the drive station 21.

Each drive station 21 comprises an actuation element support configured as a bearing block 22 which is firmly attached to the upper shell 16 of wing tip 10 and connected to the actuation rod 19 through a transmission unit 23 which is configured for transmitting the movement of actuation strut 19 to the control surface device 12. Transmission unit 23 is configured as a rocker lever having a vertical axis of rotation 24. Thus, transmission unit 23 comprises a seesaw mechanism to transform the movement of actuation strut 19 in the spanwise direction into a movement of a second actuation element configured as a second actuation strut 25 in the chordwise direction of wing tip 10.

As shown here, the rod or strut 19 is as positioned as low as possible, and the bearing block 22 with the seesaw mechanism 23 is fixedly attached to the upper shell 16, in order to achieve a high length difference when the wing tip 10 is being bent, as explained above with reference to Fig.2. The same can also be done vice versa, in which case the strut 19 is mounted and positioned as high as possible within the wing tip 10, and the bearing block 22 with seesaw mechanism or rocker lever 23 is fixedly attached to lower shell 17.

Generally speaking, the closer the actuation strut 19 is positioned to one of the shells 16, 17, the greater is the effect on the movement of strut 19 relative to bearing block 22 when the wing tip is bent. The effect is even greater if the bearing block 22 is mounted close to and most preferably at the opposite shell 17 or 16.

Drive station 21 further comprises a lever mechanism 26 configured as a lever element in form of a rocker lever which connects second actuation strut 25 to the assigned control surface device 12.

**Fig. 4** depicts an enlarged view of the rocker lever 26. It comprises an input lever 27 and an output lever 28 rotating around a rotation axis 29 oriented in the spanwise direction of wing tip 10, wherein the input lever 27 is shorter than output lever 28. As an example, the relation of the lengths of input lever 27 to output lever 28 is 1:5. Reference number 30 designates a hinge line of the control surface device 12 being mounted to lever mechanism 26. By lever mechanism 26, the steering movement of strut 19 is amplified when transmitted to control surface device 12.

The linkage is sized and designed to have a setting of the Mini-TED 12 of around 60° in Cruise. In upbending cases, the MiniTED retracts and loses significant effect when going to low angles. The associated drop of the lift-coefficient is the intended means to reduce lift on the wing tip 10 and to subsequently reduce the wing-bending on the main wing.

The primary effect of trailing edge movement is that the C_{L} α curve, which is the value of the lift coefficient C_{L} as a function of the angle of attack α, is shifted upwards or downwards. The shift may e.g. be about 0,5. In principle, the Mini-TED works like a movable gurney flap and has an effect similar to that. An embodiment is that such little flap swings downwards, as depicted in Fig. 3.

A particularly preferred example shall be given in the following:
Under usual flight conditions, the upper shell 16 is for example compressed by about 2 %o and lower shell 17 is stretched by about 2 %o. The rod 19 with its connecting point is provided as low as possible within wing tip 10 and will show no stretch or quasi-no stretch, and the bearing block 22 is provided at upper shell 16. In this case, a length difference of about 4 %o between X1 and X2 is achieved when wing tip 10 is bent (see Fig. 2). Thus, at a length of e.g. two meters, this configuration thus leads to a steering movement of about 8 mm. This steering movement is preferably amplified by seesaw mechanism 26, due to the relation between its input 27 and its output 28, which is e.g. 1:5. Thus, the steering movement of actuation strut 19 results in a control surface device movement of 4 cm.

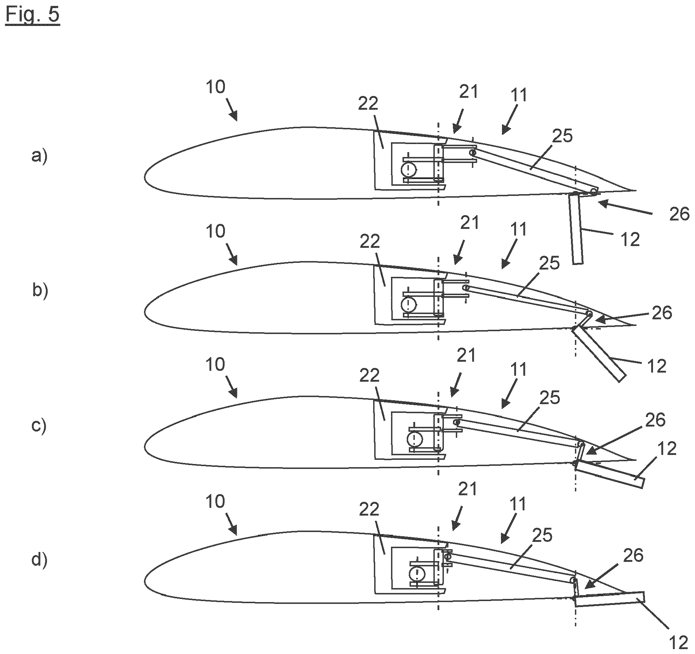

**Fig. 5** depicts schematic cross section views of the load alleviation device 11 having the Mini-Teds 12 forming control surface devices in different positions depending on the bending of the wing tip 10. Details of the load alleviation device 11 are described above with reference to Figs. 1 to 4.

The aerodynamic design of the clean profile (less rear-loading in clean) and the overall aerodynamic design is taking into account the deployed Mini-TEDs and their retraction due to wing-upbending to maximise its effect.

Figures 5a-d schematically show specific examples according to a preferred embodiment.

Fig. 5a shows the device 11 when the aircraft is on ground. This leads to a deployment angle δ=90°.

Fig. 5b shows the device 11 during cruise of the aircraft under the condition of 1g. This leads to a deployment angle δ=50°.

Fig. 5c shows the device 11 during a dive of the aircraft under the condition of 2,5 g as a lower limit load. This leads to a deployment angle δ=20°.

Fig. 5d shows the device 11 during a dive of the aircraft under the condition of 2,5 g as an upper limit load. This leads to a deployment angle δ=0°.

For example, when the aircraft is after take-off there is a certain load on the wing tip 10 bending it upwards. Under such conditions there is rarely a difference in the effect of the control surface device 12, which is an aerodynamic advantage. But if there is for example a condition under 2,5 g, then it considerably folds in and thus reduces the lift. That means that a reduction of the load of the wing is achieved. Such configuration of Mini-Ted's is just for a load alleviation.

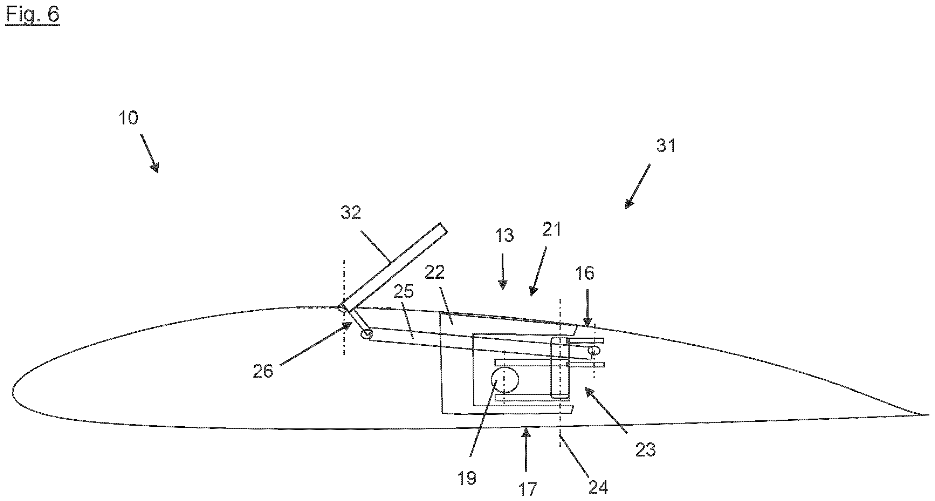

**Fig. 6** depicts a load alleviation device 31 according to a second embodiment of the invention, comprising a control surface device configured as a spoiler element 32 instead of a TED or Mini-TED. The principle of actuating spoiler element 32 via drive train 13 comprising actuation strut 19 connected to one or more drive stations 21 is the same as described above, but applied to pop-up spoiler 32 thus having a slightly adapted configuration.

Also in this embodiment, the spanwise actuation strut 19 is attached to the input of rocker lever 23, and second actuation strut 25 is attached to the output of rocker lever 23, the second actuation strut 25 extending chordwise for transmitting the motion of spanwise extending actuation strut 19 to the control surface device 32 by a rotational movement of rocker lever 23 around rocker lever axis 24. The rocker lever axis support configured as bearing block 22 is attached to the upper skin or shell 16 only, at least in the spanwise direction of freedom.

The difference to the first embodiment as described with reference to Figs. 1 to 4 is that the control surface device is a spoiler element 32 and positioned on the upper shell 16 of wing tip 10. In this example and different from the first embodiment, second actuation strut 25 extends forward towards the leading edge of wing tip 10 in order to connect to spoiler element 32.

Like in the first embodiment, to which reference is made, the drive station 21 may further comprise lever mechanism 26 configured as a lever element in form of a rocker lever, which connects second actuation strut 25 to the assigned control surface device 32, and which, depending on the requirements, may amplify the motion of the actuation strut 19 when it is transmitted to control surface device 32.

Regarding further details, functions and advantages, reference is made to Figs. 1 to 5 and the corresponding description.

The rocker lever arrangement of this second embodiment preferably makes use of an "overcenter"-design principle to have little movement in normal cases. Another linkage or link-motion-mechanism may be used depending surface requirements for cruise.

Preferably, the spoiler should be pretty flat up to 1 g, and above 1,1 or 1,2 g it may start to deploy corresponding to the increased bending of wing tip 10.

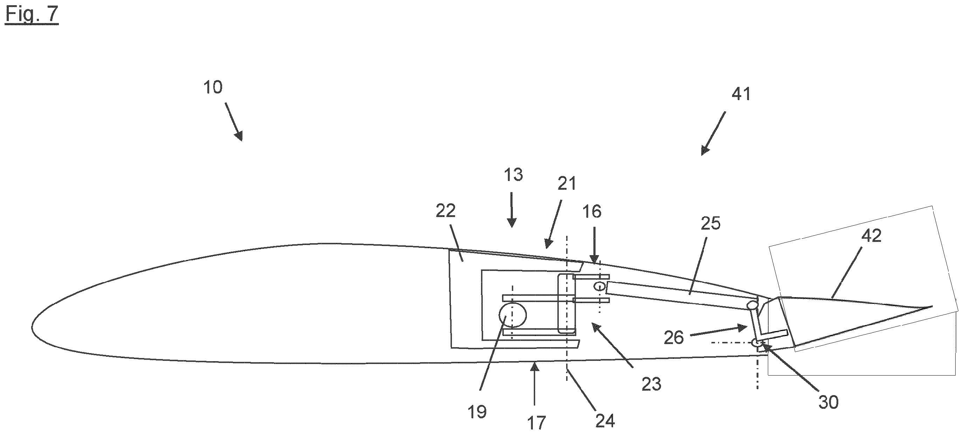

**Fig. 7** depicts a load alleviation device 41 according to a third embodiment of the invention, comprising a control surface device configured as an aileron 42 or a camber tab like device. The principle of actuating spoiler element 42 via drive train 13 comprising actuation strut 19 connected to one or more drive stations 21 is the same as described above, but applied to aileron 42 or camber like tab device, thus having a slightly adapted configuration.

In this embodiment, the spanwise actuation strut 19 is attached to the input of rocker lever 23, and second actuation strut 25 is attached to the output of rocker lever 23, the second actuation strut 25 extending chordwise for transmission of the motion of spanwise extending actuation strut 19 to the control surface device 42 by a rotational movement of rocker lever 23 around rocker lever axis 24. The rocker lever axis support configured as bearing block 22 is attached to the upper skin or shell 16 only, at least in the spanwise direction of freedom.

Like in the first embodiment, to which reference is made, the drive station 21 may further comprise lever mechanism 26 configured as a lever element in form of a rocker lever, which connects second actuation strut 25 to the assigned control surface device 42, and which, depending on the requirements, may amplify the motion of the actuation strut 19 when it is transmitted to control surface device 42.

Regarding further details, functions and advantages, reference is made to Figs. 1 to 5 and the corresponding description.

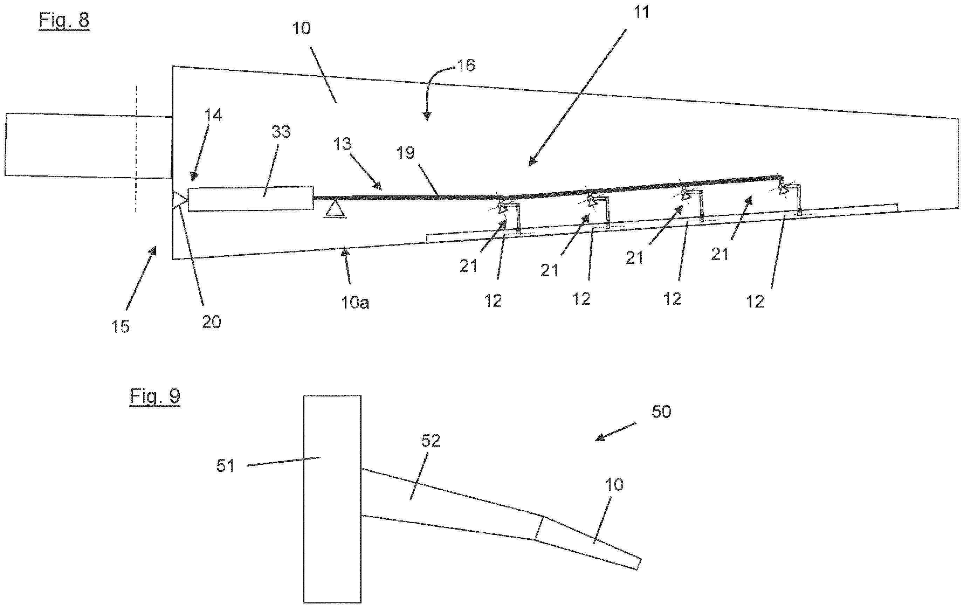

**Fig. 8** depicts a load alleviation device 11 according to a fourth embodiment of the invention, comprising an active actuator 33 in combination with drive train 13.

The depicted design shows "push"-rods, which will see mainly pressure loads on the struts 19. The principle can be inverted to eventually have tension loads on the rods. This is beneficial for the strut-stability-sizing.

Regarding all further details, functions and advantages, reference is made to Figs. 1 and 2.

**Fig. 9** depicts an aircraft 50 comprising a fuselage 51, a main wing 52 and a wing tip 10 equipped with a load alleviation device according to the invention.

The invention is applicable to spoiler's, MiniTED's and also normal flaps, tabs and/or ailerons. It is important that these elements have an effect on the lift. The MiniTED is the most preferred application. The main advantage of the MiniTED is the load alleviation of the main wing. The wing tip is extremely efficient because of its long leverage. The invention achieves that the movement for load alleviation is at the right time when for example a gust arrives. The movement causes a shift of the lift more to the inner side so that it is more at the inner wing instead of attacking the wing tip which has a big effect through its high leverage. A high amount of material and weight can be saved at the main wing by the wing tip equipped with the load alleviation device according to the invention, which can be for example 800 kg up to 3000 kg and more, depending on the aircraft.

### List of reference numbers:

- 10: wingtip
- 10a: trailing edge of wingtip
- 11: load alleviation device
- 12: control surface device
- 13: drivetrain
- 14: end of drivetrain
- 15: root 15 of wingtip
- 16: upper shell
- 17: lower shell
- 18: neutral axis
- 19: actuation element / actuation strut
- 20: mounting location
- 21: coupling units / drive stations
- 22: actuation element support / bearing block
- 23: transmission unit / a rocker lever
- 24: axis of rotation
- 25: second actuation element / second actuation strut
- 26: lever mechanism / lever element
- 27: input lever
- 28: output lever
- 29: rotation axis
- 30: hinge line of control surface device
- 31: load alleviation device
- 32: spoiler element / control surface device
- 33: actuator
- 41: load alleviation device
- 42: aileron / control surface device
- 50: aircraft
- 51: fuselage
- 52: main wing
- L1: length of strut
- X1: length of deformed lower shell
- X2: length of deformed upper shell

## Claims

1. Load alleviation device for a wing tip of an aircraft, comprising:
one or more control surface devices (12, 32, 42) for increasing and/or decreasing the lift of a wing tip (10),
a drive train (13) connected to at least one of the control surface devices (12, 32, 42) for actuating a movement of the control surface devices (12, 32, 42),
wherein the drive train (13) is configured to be mounted with one end (14) near the root (15) of the wing tip (10) and to extend spanwise between an upper shell (16) and a lower shell (17) of the wing tip (10) at least partly out of the neutral axis (18) of the wing tip (10), to cause a movement of the control surface device (12, 32, 42) by the bending of the wing tip (10).

2. Load alleviation device according to claim 1, **characterized in that** the control surface device (12, 32, 42) is configured to be actuated by different strain levels of the upper shell (16) and/or the lower shell (17) and the drive train (13) of the wing tip (10) resulting from its bending.

3. Load alleviation device according to claim 1 or 2, **characterized in that** the drive train (13) comprises at least one spanwise extending actuation element (19) configured for being actuated by the bending of the wing tip (10) and connected to one or more drive stations (21).

4. Load alleviation device according to claim 3, **characterized in that** each drive station (21) comprises a transmission unit (23) for transmitting the spanwise movement of the actuation element (19) to the one or more control surface devices (12, 32, 42).

5. Load alleviation device according to claim 3 or 4, **characterized in that** each drive station (21) comprises a lever element (26) for amplifying the movement of the actuation element (19) when that movement is transmitted to the control surface device (12, 32, 42).

6. Load alleviation device according to one of the preceding claims, **characterized in that** at least a major part of the drive train (13) is mounted closer to one of the wing shells (17) than to the other wing shell (16).

7. Load alleviation device according to one of the preceding claims, **characterized in that** the drive train (13) is designed so that the major part of actuation element (19) is positioned out of the neutral axis (18).

8. Load alleviation device according to one of claims 3 to 7, **characterized in that** the actuation element (19) has a high longitudinal stiffness compared to the stiffness of the upper and lower shells (16, 17) of the wing tip (10).

9. Load alleviation device according to one of claims 3 to 8, **characterized in that** the actuation element (19) is configured as strut or rod.

10. Load alleviation device according to one of the preceding claims 3 to 9, **characterized by** an actuation element support (22) configured for being mounted to that one (16) of the upper and lower shells (16, 17) which is located further away from at least the major part of the actuation element (19) than the other one (17) of the upper and lower shells (16, 17) of the wing tip (10).

11. Load alleviation device according to one of claims 4 to 10 and/or 5 to 10, **characterized in that** the transmission unit (23) and/or the lever element (26) comprises a rocker lever.

12. Load alleviation device according to one of the preceding claims, **characterized in that** the at least one control surface devices (12, 32, 42) is configured as a tab, Mini TED, flap, aileron, and/or spoiler element, or a combination thereof.

13. Method for alleviating the load of a wing tip of an aircraft, comprising the steps:
providing one or more control surface devices (12, 32, 42) for increasing and/or decreasing the lift of the wing tip (10),
providing a drive train (13) connected to at least one of the control surface devices (12, 32, 42),
wherein the drive train (13) is mounted with one end near the root of the wing tip (10) and extending spanwise between an upper shell (16) and a lower shell (17) of the wing tip (10) at least partly out of the neutral axis (18) of the wing tip (10) when the wing tip (10) is bent,
actuating a movement of the control surface device (12, 32, 42) by causing a movement of the drive train (13) through the bending of the wing tip (10).

14. Wing tip, **characterized by** the load alleviation device (11, 31, 41) according to one of claims 1 to 12 and/or by use of the method according to claim 13

15. Aircraft, **characterized by** a wing comprising a wing tip (10) according to claim 14.
